# FASCICULE DE BREVET EUROPEEN

(11) **EP 4 143 477 B1**
(45) Date de publication et mention de la délivrance du brevet: **04.09.2024**
(21) Numéro de dépôt: 21720519.4
(22) Date de dépôt: 26.04.2021
(51) Int. Cl.: F17C 13/06

(54) **EMBASE POUR RÉSERVOIR DE GAZ SOUS PRESSION**
BASIS FÜR DRUCKGASBEHÄLTER
BASE FOR PRESSURISED GAS TANK

(30) Priorité: 27.04.2020 FR 2004154
(43) Date de publication de la demande: 08.03.2023
(73) Titulaire: Faurecia Systèmes d'Echappement, 92000 Nanterre (FR)
(72) Inventeur: GODARD, Yannick, 25250 BLUSSANS (FR); BACHELARD, Nicolas, 90000 BELFORT (FR)
(74) Mandataire: Lavoix
(86) Numéro de dépôt international: PCT/EP2021/060840
(87) Numéro de publication internationale: WO 2021/219551

(56) Documents cités:
- WO-A1-00/49330
- CN-A- 111 174 083
- JP-A- 2005 009 591
- JP-A- 2018 151 047
- US-A1- 2009 200 757
- US-A1- 2011 220 661
- US-A1- 2014 272 670
- US-A1- 2018 372 272
- US-A1- 2019 063 686
- US-A1- 2019 257 474
- US-B2- 10 323 795
- US-B2- 10 323 795
- US-B2- 10 458 598
- US-B2- 7 857 159
- US-B2- 8 640 910

## Description

La présente invention concerne le domaine des réservoirs pour gaz sous pression, tel de l'hydrogène et plus particulièrement une embase pour un tel réservoir.

Il est connu de réaliser de tels réservoirs au moyen d'une structure, délimitant un volume du réservoir, et d'une enveloppe d'étanchéité ou « liner » recouvrant toute la surface interne de la structure, de manière à assurer une étanchéité au gaz. La structure est percée d'un trou dans lequel est disposée une embase. Cette embase est percée d'une canalisation permettant de relier l'intérieur du réservoir avec l'extérieur du réservoir, afin de pouvoir réaliser les opérations de remplissage et de puisage. L'enveloppe d'étanchéité comporte une ouverture coïncidant avec le trou et la canalisation. Il convient d'assurer l'étanchéité entre l'ouverture et la canalisation.

Ceci est d'autant plus délicat que les pressions sont importantes. Un réservoir est qualifié pour une pression de l'ordre de 1035 à 1050 bars, mais cette dernière peut atteindre 1700 bars. De plus, la molécule de gaz, particulièrement dans le cas de l'hydrogène, peut être très petite, et le gaz parvient, à traverser la moindre section de fuite.

Il est encore connu, pour réaliser cette étanchéité, de réaliser dans l'embase, côté intérieur, une encoche sensiblement tubulaire. L'enveloppe d'étanchéité est typiquement réalisée en matériau élastomère et présente un goulot autour de l'ouverture conformé de manière à venir se loger dans l'encoche.

Du fait de son mode de fabrication par extrusion soufflage, l'enveloppe d'étanchéité, et avec elle son goulot, présente une dispersion dimensionnelle de l'ordre de 0,5 mm, conduisant à un jeu circulaire entre le goulot et l'encoche du même ordre. Il convient de rattraper ce jeu circulaire pour assurer l'étanchéité.

Pour cela, il est possible de forcer le goulot dans l'encoche, en le déformant. Cependant, un tel montage à force nécessite d'utiliser de la graisse. La graisse résiduelle constitue une pollution préjudiciable.

Il est encore connu d'inclure dans l'embase un manchon tubulaire, du côté intérieur du réservoir, de diamètre intérieur supérieur ou égal au diamètre de la canalisation et de diamètre extérieur inférieur ou égal au diamètre intérieur de l'encoche, et d'extension axiale au moins égale à celle de l'encoche. Ainsi le manchon recouvre axialement le goulot de l'enveloppe d'étanchéité sur la profondeur de l'encoche. Une expansion du manchon, par passage d'un dudgeon, permet de réduire la largeur de l'encoche en pinçant le goulot de l'enveloppe sur toute une circonférence du goulot.

Cependant l'utilisation du dudgeon est peu répétable, et l'expansion du manchon peut ne pas suffire à assurer l'étanchéité.

Aussi une solution complémentaire est recherchée.

Il est également connu, d'après US 10323795, d'ajouter un joint torique et une gorge apte à accueillir le joint torique. US 10 458 589 décrit par ailleurs une embase similaire à celle du préambule de la revendication 1.

Selon l'invention, il est ajouté un corps et une bague sensiblement tubulaire d'axe X, interfacés par une surface de révolution autour de l'axe X passant par la gorge.

Pour cela, l'invention a pour objet une embase selon la revendication 1.

Des caractéristiques ou des modes de réalisation particuliers, utilisables seuls ou en combinaison, sont :
- la gorge est disposée dans la paroi extérieure de l'encoche,
- l'embase comprend encore une rondelle, apte à être disposée dans la gorge, entre le joint torique et la bague,
- la bague est assemblée avec le corps par collage ou soudage,
- la rondelle est fendue, par coupure complète d'une de ses sections, préférentiellement selon un angle à 30° relativement au plan de la rondelle,
- la rondelle est réalisée en matériau élastique et présente un diamètre au repos inférieur au diamètre extérieur de l'enveloppe d'étanchéité, afin que son diamètre intérieur s'adapte automatiquement au diamètre extérieur de l'enveloppe d'étanchéité avec un effort de serrage,
- le manchon est réalisé de matière avec le corps,
- le corps et la bague sont en matériau métallique, le joint torique est en matériau élastomère et la rondelle est en polymère, tel du PTFE.

Dans un deuxième aspect de l'invention, un réservoir de gaz sous pression, comprenant une telle embase.

L'invention sera mieux comprise à la lecture de la description qui suit, faite uniquement à titre d'exemple, et en référence aux figures en annexe dans lesquelles :
[Fig. 1] montre en vue latérale coupée une embase assemblée avec une enveloppe d'étanchéité,

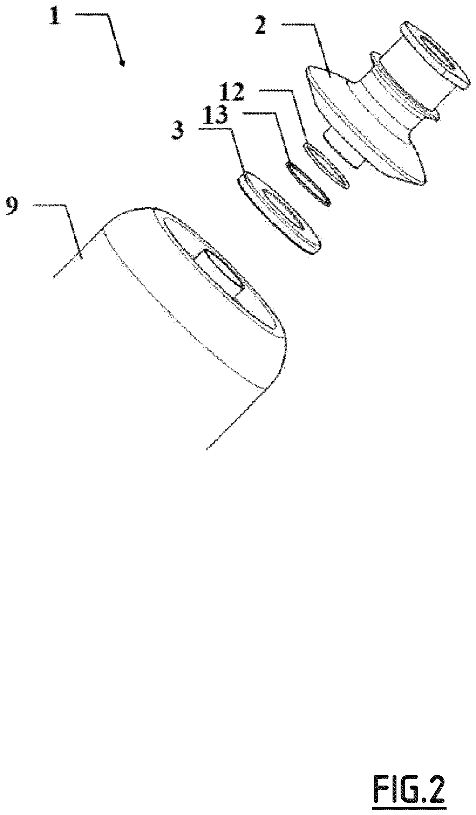

[Fig. 2] montre en vue perspective éclatée, l'ensemble de la figure 1,
[Fig. 3] montre un plan d'une rondelle, avec de gauche à droite, une vue de profil, une vue de face et une section agrandie.

Un réservoir pour gaz sous pression, tel de l'hydrogène, présente typiquement une forme sensiblement de révolution autour d'un axe X. Un tel réservoir comprend une structure (non représentée), pouvant notamment être réalisée en enroulant une fibre, telle une fibre de verre ou une fibre de carbone, préalablement enduite d'un liant, tel une résine époxy, polyester, thermoplastique. Ladite structure confère sa rigidité au réservoir et en délimite le volume. La structure ne peut assurer l'étanchéité au gaz sous pression. Aussi un réservoir comprend encore une enveloppe 9 d'étanchéité. Cette enveloppe 9, le plus souvent souple et réalisée en matériau élastomère et/ou thermoplastique, recouvre toute la surface interne de la structure, de manière à assurer l'étanchéité au gaz.

Afin de permettre le remplissage et/ou le puisage du gaz, il est ménagé dans la structure du réservoir au moins une ouverture. Le réservoir comprend encore une embase 1 disposée, de manière ajustée, dans chacune de ladite au moins une ouverture. L'ajustement est ici obtenu en réalisant la structure autour de l'embase, typiquement par enroulement filamentaire. Une ouverture dans la structure est formée, par ce mode de réalisation, du fait de la présence d'une embase 1. Une embase 1 est traversante relativement à la structure. Selon un mode de réalisation, une embase 1, généralement métallique, comprend au moins une canalisation 4 traversante afin de permettre une connexion entre l'intérieur 6 et l'extérieur 5 du réservoir et ainsi le remplissage et/ou le puisage du gaz. Selon un mode de réalisation, une embase 1 est sensiblement symétrique de révolution autour de l'axe X. Ainsi par exemple, une embase 1 peut être sensiblement cylindrique.

L'étanchéité est réalisée au moyen d'une interface étanche entre l'enveloppe 9 et une embase 1. Cette interface étanche est par exemple obtenue par une encoche 7 accueillant le col ou goulot de l'enveloppe 9.

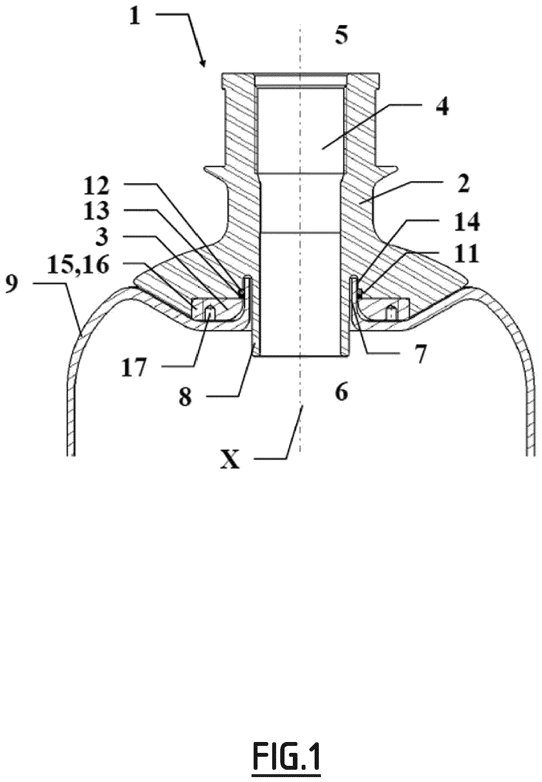

En référence à la figure 1, l'embase 1 est sensiblement de révolution autour d'un axe X. Cet axe X est aussi l'axe de symétrie de révolution du réservoir sensiblement cylindrique (non représenté), de sa structure (non représentée) et de l'enveloppe d'étanchéité 9.

L'embase 1 est percée d'une canalisation 4 sensiblement cylindrique d'axe X, permettant de relier l'extérieur 5 du réservoir, ici en haut dans le plan de la figure 1, à l'intérieur 6 du réservoir, ici en bas dans le plan de la figure 1.

Une encoche 7 sensiblement tubulaire d'axe X, disposée du côté intérieur 6 du réservoir, est ménagée dans l'embase 1, autour de la canalisation 4. Elle présente une forme en creux complémentaire de celle du goulot de l'enveloppe 9 d'étanchéité de manière à pouvoir accueillir le goulot de l'enveloppe 9 d'étanchéité.

On entend dans la présente par tubulaire une forme cylindrique creuse, en plein ou en creux. Ainsi le goulot présente une forme tubulaire en plein, soit une forme cylindrique, creuse du fait de l'ouverture, mais en plein. Au contraire, l'encoche 7 qui présente une forme complémentaire de celle du goulot, présente une forme tubulaire en creux, soit une forme cylindrique, creuse du fait de la présence du manchon 8, et en creux.

Un manchon 8 sensiblement tubulaire d'axe X, ici un tube en plein, disposé du côté intérieur 6 du réservoir, est encore adjoint à l'embase 1. Le manchon 8 présente un diamètre intérieur sensiblement égal au diamètre de la canalisation 4 et un diamètre extérieur sensiblement égal au diamètre intérieur de l'encoche 7. Il présente encore une extension axiale au moins égale à celle de l'encoche 7. Ceci permet, au moyen d'une expansion du manchon 8, par passage d'un dudgeon dans la canalisation 4, de réduire la largeur du profil de l'encoche 7 de manière à pincer circulairement le goulot de l'enveloppe 9 d'étanchéité.

Ceci assure une étanchéité entre l'enveloppe 9 d'étanchéité et l'embase 1. Il convient cependant d'améliorer cette étanchéité par une deuxième mesure, pour le cas où l'expansion du manchon 8 ne serait pas suffisante.

Aussi, selon une caractéristique importante de l'invention, l'embase 1 comprend encore un joint torique 12 et une gorge 11 d'axe X, pour accueillir ce joint torique 12. Cette gorge 11 est disposée dans une paroi latérale de l'encoche 7.

Tel qu'illustrée à la figure 1, cette gorge 11 est la paroi extérieure 14 de l'encoche 7. Il serait alternativement possible de disposer la gorge 11 dans la paroi intérieure de l'encoche pour une mise en oeuvre et un résultat équivalents.

Cependant, lors de sa réalisation par extrusion soufflage, la surface extérieure de l'enveloppe 9 d'étanchéité est plaquée contre l'outillage et présente, de ce fait, un meilleur état de surface que la surface intérieure, qui est plus brute et peut présenter des bulles. Un usinage pour améliorer cette surface intérieure est possible, mais nécessite une opération additionnelle et cause un coût supplémentaire.

Aussi une disposition de la gorge 11 et donc du joint torique 12 en regard de cette surface extérieure de l'enveloppe 9 d'étanchéité est préférée, en ce qu'elle permet plus rapidement d'obtenir une meilleure étanchéité au meilleur coût.

Ce joint torique 12 vient appliquer une pression annulaire sur la surface extérieure du goulot de l'enveloppe 9 d'étanchéité, et ainsi coopère avec l'expansion du manchon 8 contre la surface intérieure du goulot. Les deux mesures conjuguées assurent une étanchéité parfaite entre l'enveloppe 9 d'étanchéité et l'embase 1.

La gorge 11 est cependant difficile d'accès. Le joint torique 12, étant déformable, peut, malgré tout, être mis en place dans la gorge 11. Il en est de même d'une éventuelle rondelle 13 décrite plus avant. Cependant, avec une embase 1 monobloc, la largeur de la section de l'encoche 7, sensiblement égale à l'épaisseur de l'enveloppe 9 d'étanchéité, soit typiquement quelques millimètres, est trop faible pour permettre le passage d'un outil apte à usiner la gorge 11.

Aussi, afin de rendre accessible la gorge 11, l'embase 1 est réalisée en deux parties : un corps 2 et une bague 3. La bague 3 est sensiblement tubulaire, ici en plein, d'axe X. La surface de contact qui interface le corps 2 et la bague 3, est une surface de révolution autour de l'axe X passant par la gorge 11. Ainsi, lorsque la bague 3 est retirée, la projection axiale selon l'axe X de la gorge 11 est libre et la gorge 11 est accessible axialement à un outil et peut ainsi être usinée dans le corps 2 et, le cas échéant, pour partie dans la bague 3. La surface séparant le corps 2 de la bague 3 peut être quelconque. Avantageusement, telle que représentée, elle est sensiblement plane au niveau de la gorge 11. Avantageusement encore, elle se confond avec la surface latérale extérieure de la gorge 11, de manière à former ladite surface latérale extérieure de la gorge 11.

Selon une autre caractéristique, il est encore avantageusement ajouté une rondelle 13. Cette rondelle 13 est dimensionnée de manière à pouvoir être disposée dans la gorge 11, entre le joint torique 12 et la bague 3.

Sa fonction est de fermer l'espace circulaire entre la face extérieure 14 de l'encoche 7 et la face extérieure du goulot de l'enveloppe 9 d'étanchéité en regard de manière à empêcher une extrusion du joint torique 12 entre l'enveloppe 9 et la bague 3, sous l'effet des importantes pressions de gaz.

L'assemblage du corps 2 et de la bague 3 peut se faire selon tout mode de réalisation. Selon un premier mode de réalisation, la bague 3 peut être visée avec le corps 2 au moyen de vis, avantageusement parallèles à l'axe X. Selon un autre mode de réalisation, la bague 3 comporte une face extérieure 15 cylindrique et cette dernière est filetée, selon un filetage d'axe X, et le corps 2 présente une face cylindrique intérieure 16 homologue et taraudée. Ainsi, la bague 3 peut être vissée dans le corps 2, par rotation autour de l'axe X. Des moyens d'interface, tel des perçages 17, permettent d'engager un outil de mise en rotation.

Selon un autre mode de réalisation, l'assemblage de la bague 3 avec le corps 2 est réalisé par collage. Selon encore un autre mode de réalisation l'assemblage est réalisé par soudage.

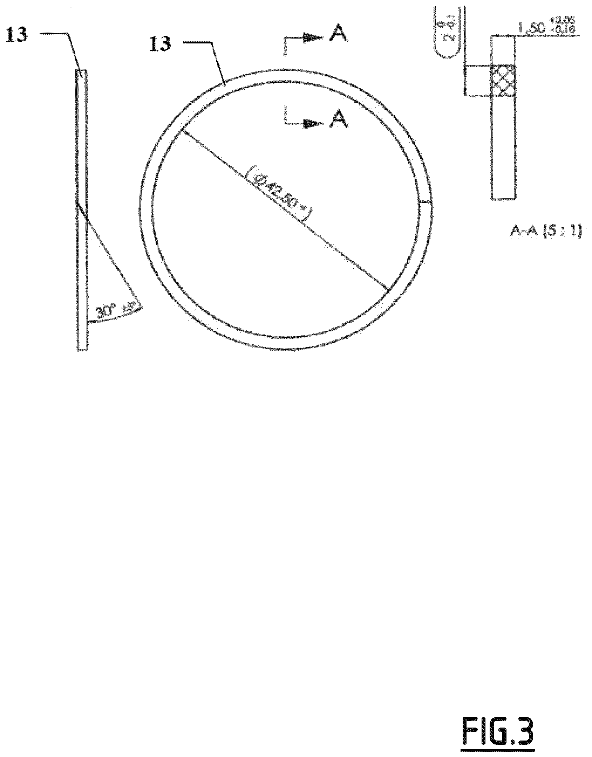

Selon une autre caractéristique, plus particulièrement illustrée à la figure 3, la rondelle 13 est fendue, par une coupure complète au travers d'une de ses sections, préférentiellement selon un angle à 30° relativement au plan de la rondelle 13. Ceci confère une certaine déformabilité à la rondelle 13, et lui permet de s'adapter à différents diamètres. Ainsi son diamètre intérieur peut s'adapter au diamètre extérieur de l'enveloppe 9 d'étanchéité, que la rondelle 13 entoure au niveau du goulot. Ce diamètre du goulot de l'enveloppe 9 peut varier de +/-0,5 mm du fait des tolérances de fabrication. Le biseau à 30° fonctionne comme un bouvetage en ce qu'il permet de maintenir un recouvrement des deux lèvres de la coupe, et ainsi assurer une continuité circulaire de la rondelle 13, au contact du joint torique 12, malgré une variation du diamètre. La rondelle 13 présente une section quelconque, préférentiellement rectangulaire, telle que représentée.

Selon une autre caractéristique, la rondelle 13 est réalisée en matériau élastique et son diamètre au repos est inférieur au diamètre extérieur de l'enveloppe 9 d'étanchéité. Ainsi le diamètre de la rondelle 13 s'adapte automatiquement au diamètre de l'enveloppe 9 d'étanchéité, y compris lorsque ce dernier varie. Ceci permet de compenser les variations dimensionnelles d'une enveloppe 9 à l'autre, mais encore de compenser les variations dimensionnelles d'une même enveloppe 9 sous l'effet de la pression ou de la température. Du fait de l'élasticité du matériau constitutif de la rondelle 13, l'adaptation de diamètre s'effectue avec une certaine contrainte. Aussi un effort de rappel crée un serrage de la rondelle 13 autour du goulot de l'enveloppe 9. Ceci permet de maintenir un contact adaptatif entre le diamètre intérieur de la rondelle 13 et le diamètre extérieur de l'enveloppe 9 et donc une absence de jeu

Selon une autre caractéristique, le manchon 8 est réalisé de matière avec le corps 2.

Selon une autre caractéristique, le corps 2 et la bague 3 sont en matériau métallique.

Selon une autre caractéristique, le joint torique 12 est, de manière classique, en matériau élastomère.

Selon une autre caractéristique, la rondelle 13 est en polymère, tel du PTFE, afin de lui conférer la rigidité et l'élasticité requises à ses fonctions.

L'invention concerne encore un réservoir de gaz sous pression comprenant une telle embase 1.

Pour réaliser un réservoir, l'embase 1 est préparée en montant le joint torique 12 dans la gorge 11. Ensuite, la rondelle 13 est mise en place dans la gorge sur le joint torique 12. L'ensemble joint torique 12 et rondelle 13 est maintenu en place par l'assemblage de la bague 3 sur le corps 2.

L'enveloppe 9 est ensuite mise en place, en engageant son goulot dans l'encoche 7. Le goulot force la rondelle 13 qui se déforme pour permettre le passage du goulot et s'ajuste autour de son diamètre.

L'assemblage de l'enveloppe 9 avec l'embase 1 est réalisée par collage. La colle présente encore un avantage. Il est possible, du fait des tolérances d'usinage qu'un léger décrochement apparaisse, au point triple, à l'interface entre le corps 2, la bague 3 et l'enveloppe 9. La colle permet avantageusement de remplir le décrochement et ainsi d'éviter qu'il ne devienne contondant pour l'enveloppe 9. La colle permet de remplir tout jeu éventuel entre l'embase 1 et l'enveloppe 9.

Une expansion du manchon 8 peut avantageusement être obtenue par passage d'un dudgeon dans le manchon 8. Cette expansion permet de plaquer le goulot de l'enveloppe 9 contre la paroi en regard 14 de l'encoche 7 et contre le joint torique 12 afin de renforcer l'étanchéité. Cette opération est réalisée après mise en place de l'enveloppe 9 d'étanchéité.

La structure du réservoir est ensuite réalisée, typiquement par enroulement d'un filament de fibre enrobée d'une résine.

L'invention a été illustrée et décrite en détail dans les dessins et la description précédente. Celle-ci doit être considérée comme illustrative et donnée à titre d'exemple et non comme limitant l'invention à cette seule description.

### Liste des signes de référence

1 : embase,
2 : corps,
3 : bague,
4 : canalisation,
5 : extérieur,
6 : intérieur,
7 : encoche,
8 : manchon,
9 : enveloppe,
11 : gorge,
12 : joint torique,
13 : rondelle,
14 : face extérieure de l'encoche,
15 : face extérieure de la bague,
16 : face intérieure du corps,
17 : perçage.

## Revendications

1. Embase (1) pour réservoir de gaz sous pression, tel de l'hydrogène, sensiblement de révolution autour d'un axe (X), comprenant une canalisation (4) sensiblement cylindrique autour dudit axe (X), traversant l'embase (1) afin de relier l'extérieur (5) du réservoir à l'intérieur (6) du réservoir, une encoche (7) sensiblement tubulaire autour dudit axe (X), disposée du côté intérieur (6) du réservoir, apte à accueillir une enveloppe (9) d'étanchéité, et un manchon (8) sensiblement tubulaire autour dudit axe (X), disposé du côté intérieur (6) du réservoir, de diamètre intérieur sensiblement égal au diamètre de la canalisation (4) et de diamètre extérieur sensiblement égal au diamètre intérieur de l'encoche (7), d'extension axiale au moins égale à celle de l'encoche (7), un joint torique (12) et une gorge (11) définie autour dudit axe (X), apte à accueillir le joint torique (12), disposée dans une paroi latérale de l'encoche (7), dans lequel l'embase (1) comprend encore un corps (2) et une bague (3) sensiblement tubulaire autour dudit axe (X), interfacés par une surface de révolution autour de l'axe (X) passant par la gorge (11), **caractérisée en ce que** la bague (3) présente une face cylindrique extérieure filetée (15) et le corps (2) présente une face cylindrique intérieure taraudée (16) correspondante afin de permettre l'assemblage de la bague (3) et du corps (2) par vissage.

2. Embase (1) selon la revendication précédente, où la gorge (11) est disposée dans la paroi extérieure (14) de l'encoche (7).

3. Embase (1) selon l'une quelconque des revendications précédentes, comprenant encore une rondelle (13), apte à être disposée dans la gorge (11), entre le joint torique (12) et la bague (3).

4. Embase (1) selon la revendication 3, où la rondelle (13) est fendue, par coupure complète d'une de ses sections, préférentiellement selon un angle à 30° relativement au plan de la rondelle (13).

5. Embase (1) selon l'une quelconque des revendications 3 à 4, où la rondelle (13) est réalisée en matériau élastique et présente un diamètre au repos inférieur au diamètre extérieur de l'enveloppe (9) d'étanchéité, afin que son diamètre intérieur s'adapte automatiquement au diamètre extérieur de l'enveloppe (9) d'étanchéité avec un effort de serrage.

6. Embase (1) selon l'une quelconque des revendications 3 à 5, où le corps (2) et la bague (3) sont en matériau métallique, le joint torique (12) est en matériau élastomère et la rondelle (13) est en polymère, tel du PTFE.

7. Embase (1) selon l'une quelconque des revendications précédentes, où le manchon (8) est réalisé de matière avec le corps (2).

8. Embase (1) selon l'une quelconque des revendications précédentes, où la bague (3) est assemblée avec le corps (2) par collage ou soudage.

9. Réservoir de gaz sous pression, comprenant une embase (1) selon l'une quelconque des revendications précédentes.

## Patentansprüche

1. Basis (1) für einen Behälter für Druckgas, beispielsweise Wasserstoff, die im Wesentlichen drehsymmetrisch um eine Achse (X) ist, umfassend eine im Wesentlichen zylindrische Rohrleitung (4) um die Achse (X), die durch die Basis (1) verläuft, um das Äußere (5) des Behälters mit dem Inneren (6) des Behälters zu verbinden, eine im Wesentlichen röhrenförmige Kerbe (7) um die Achse (X), die auf der Innenseite (6) des Behälters angeordnet ist, die geeignet ist, um eine Dichtungshülle (9) aufzunehmen, und eine im Wesentlichen röhrenförmige Hülse (8) um die Achse (X), die an der Innenseite (6) des Behälters angeordnet ist, mit einem Innendurchmesser, der im Wesentlichen gleich dem Durchmesser der Rohrleitung (4) ist, und einem Außendurchmesser, der im Wesentlichen gleich dem Innendurchmesser der Kerbe (7) ist, mit einer axialen Verlängerung, die mindestens gleich der der Kerbe (7) ist, einen O-Ring (12) und eine Nut (11), die um die Achse (X) herum definiert ist, die geeignet ist, um den O-Ring (12) aufzunehmen, die in einer Seitenwand der Kerbe (7) angeordnet ist, wobei die Basis (1) auch einen Körper (2) und einen im Wesentlichen röhrenförmigen Ring (3) um die Achse (X) umfasst, die durch eine Oberfläche einer Drehung um die Achse (x) verbunden sind, die durch die Nut (11) verläuft,
**dadurch gekennzeichnet, dass** der Ring (3) eine zylindrische Außenfläche (15) mit Außengewinde aufweist und der Körper (2) eine entsprechende zylindrische Innenfläche (16) mit Innengewinde aufweist, um das Zusammenfügen des Rings (3) und des Körpers (2) durch Verschrauben zu ermöglichen.

2. Basis (1) nach dem vorstehenden Anspruch, wobei die Nut (11) in der Außenwand (14) der Kerbe (7) angeordnet ist.

3. Basis (1) nach einem der vorstehenden Ansprüche, umfassend auch eine Unterlegscheibe (13), die geeignet ist, um in der Nut (11) zwischen dem O-Ring (12) und dem Ring (3) angeordnet zu werden.

4. Basis (1) nach Anspruch 3, wobei die Unterlegscheibe (13) durch vollständiges Schneiden eines ihrer Abschnitte gespalten ist, vorzugsweise in einem Winkel von 30° relativ zu der Ebene der Unterlegscheibe (13).

5. Basis (1) nach einem der Ansprüche 3 bis 4, wobei die Unterlegscheibe (13) aus elastischem Material ausgebildet ist und in einem Ruhezustand einen Durchmesser aufweist, der kleiner als der Außendurchmesser der Dichtungshülle (9) ist, so dass sich ihr Innendurchmesser dem Außendurchmesser der Dichtungshülle (9) mit einer Klemmkraft automatisch anpasst.

6. Basis (1) nach einem der Ansprüche 3 bis 5, wobei der Körper (2) und der Ring (3) aus metallischem Material bestehen, der O-Ring (12) aus Elastomermaterial besteht und die Unterlegscheibe (13) aus Polymer, beispielsweise PTFE, besteht.

7. Basis (1) nach einem der vorstehenden Ansprüche, wobei die Hülse (8) einstückig mit dem Körper (2) ausgebildet ist.

8. Basis (1) nach einem der vorstehenden Ansprüche, wobei der Ring (3) durch Kleben oder Schweißen mit dem Körper (2) zusammengefügt wird.

9. Druckgasbehälter, umfassend eine Basis (1) nach einem der vorstehenden Ansprüche.

## Claims

1. A base (1) for a tank for pressurized gas, such as hydrogen, substantially rotationally symmetrical about an axis (X), comprising: a pipe (4) that is substantially cylindrical around said axis (X), passing through the base (1) to connect the exterior (5) of the tank to the interior (6) of the tank; a substantially tubular notch (7) around said axis (X), arranged inside (6) the tank, suitable for receiving a sealed enclosure (9); a substantially tubular sleeve (8) around said axis (X), arranged inside (6) the tank, with an inner diameter that is substantially equal to the diameter of the pipe (4) and with an outer diameter that is substantially equal to the inner diameter of the notch (7), with an axial extension that is at least equal to that of the notch (7); an O-ring (12) and a groove (11) with an axis (X), suitable for receiving the O-ring (12), arranged within a lateral wall of the notch (7); and wherein the base (1) further comprises a body (2) and a ring (3) that is substantially tubular with an axis (X), interfaced by a surface of revolution about the axis (X) passing through the groove (11), **characterized in that** the ring (3) has a threaded outer cylindrical face (15) and the body (2) has a corresponding tapped inner cylindrical face (16) to enable the assembly of the ring (3) and the body (2) by screwing.

2. Base (1) according to the preceding claim, wherein the groove (11) is arranged in the outer wall (14) of the notch (7).

3. Base (1) according to any of the preceding claims, further comprising a washer (13), suitable to be placed in the groove (11), between the O-ring (12) and the ring (3).

4. Base (1) according to claim 3, wherein the washer (13) is split, by fully cutting through one of its sections, preferably at an angle of 30° relative to the plane of the washer (13).

5. Base (1) according to any of claims 3 to 4, wherein the washer (13) is made of an elastic material and has a diameter at rest smaller than the outer diameter of the sealed enclosure (9), so that its inner diameter automatically adapts to the outer diameter of the sealed enclosure (9) with a clamping force.

6. Base (1) according to any of claims 3 to 5, wherein the body (2) and the ring (3) are made of metallic material, the O-ring (12) being made of an elastomeric material and the washer (13) of a polymer, such as PTFE.

7. Base (1) according to any of the preceding claims, wherein the sleeve (8) is made in one piece with the body (2).

8. Base (1) according to any of the preceding claims, wherein the ring (3) is mounted to the body (2) by gluing or welding.

9. Pressurized gas tank, comprising a base (1) according to any of the preceding claims.
